(19) Europäisches Patentamt
European Patent Office
Office européen des brevets

(11) Publication number: **0 070 386 B1**

(12) **EUROPEAN PATENT SPECIFICATION**

(45) Date of publication of patent specification: **11.01.89**

(51) Int. Cl.$^4$: **C 08 K 5/34**, C 08 G 73/06, C 08 F 26/00

(21) Application number: **82104992.1**

(22) Date of filing: **08.06.82**

(54) **Novel light stabilizers for polymers.**

(30) Priority: **20.07.81 US 285240**
**20.07.81 US 285239**

(43) Date of publication of application:
**26.01.83 Bulletin 83/04**

(45) Publication of the grant of the patent:
**11.01.89 Bulletin 89/02**

(84) Designated Contracting States:
**AT BE CH DE FR GB IT LI NL SE**

(56) References cited:
**EP-A-0 013 682**
**DE-A-2 308 611**
**DE-B-1 302 636**
**US-A-2 712 004**
**US-A-4 234 728**

(73) Proprietor: **AMERICAN CYANAMID COMPANY**
**1937 West Main Street P.O. Box 60**
**Stamford Connecticut 06904-0060 (US)**

(72) Inventor: **Loffelman, Frank Fred**
**1255 Cornell Road**
**Bridgewater New Jersey 08807 (US)**
Inventor: **Brady, Thomas Eugene**
**8 Dorset Lane**
**Whitehouse Station New Jersey 08889 (US)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to certain novel polymers and to their use as light stabilizers. More particularly, this invention relates to novel polymers prepared by polymerising, optionally with a comonomer, a monomer of the formula (I)

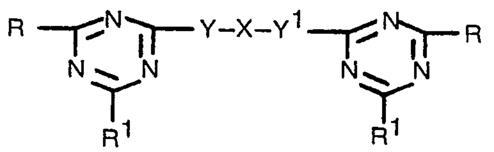

(I)

wherein R represents $C_3$—$C_6$ alkenyloxy, $C_3$—$C_6$ alkenylamino, or di($C_3$—$C_6$ alkenyl)amino; $R^1$ represents $C_1$—$C_8$ alkyl, $C_1$—$C_8$ alkoxy, halo, $C_1$—$C_8$ alkylthio, $C_3$—$C_6$ alkenyloxy, amino, $C_3$—$C_6$ alkenylamino, di($C_3$—$C_6$ alkenyl)amino, the groups

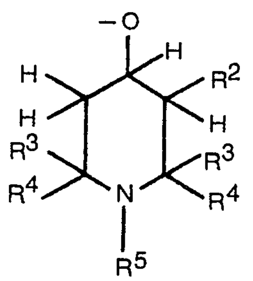

or

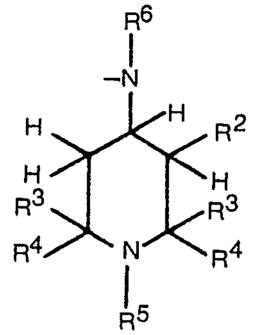

wherein $R^2$, $R^3$, $R^4$, $R^5$, and $R^6$ are as defined below, $C_1$—$C_{18}$ alkylamino, $C_1$—$C_{18}$ dialkylamino, morpholino, piperidino, pyrrolidyl, a substituted $C_1$—$C_{18}$ alkylamino, or a substituted $C_1$—$C_{18}$ dialkylamino, wherein the substituents are selected from amino, cyano, carboxy, alkoxycarbonyl wherein the alkoxy moiety has 1 to 8 carbon atoms, and the groups

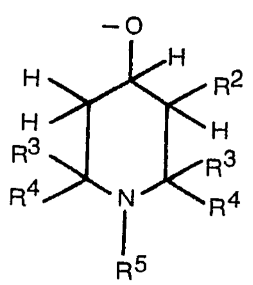

or

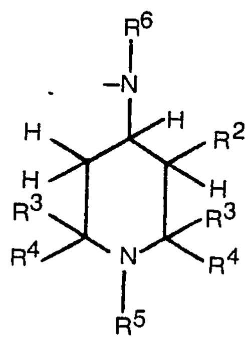

wherein $R^2$ represents hydrogen, $C_1$—$C_8$ alkyl, or benzyl; $R^3$ and $R^4$ independently represent $C_1$—$C_8$ alkyl, benzyl, or phenethyl, or together with the carbon to which they are attached form a $C_5$—$C_{10}$ cycloalkyl; and $R^5$ represents hydrogen, $C_2$—$C_3$ hydroxyalkyl, $C_1$—$C_8$ alkyl, hydroxyl, or oxyl; $R^6$ represents hydrogen, $C_1$—$C_8$ alkyl, or

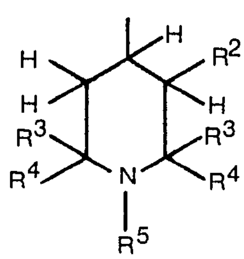

wherein $R^2$, $R^3$, $R^4$, and $R^5$ are as previously defined; Y and Y', which may be the same, or different, represent oxy, or

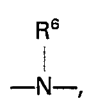,

wherein $R^6$ is as previously defined; X represents $C_2$—$C_{12}$ alkylene, wherein the alkylene chain may be interrupted by an oxy, thio, or

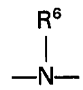

radical, $C_5$—$C_{10}$ cycloalkylene,

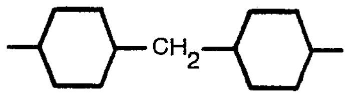 , 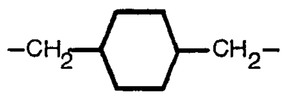 , 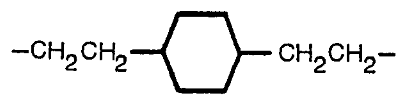 ,

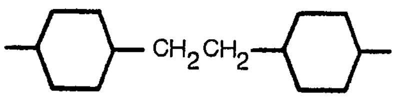 , 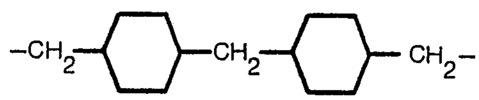 ,

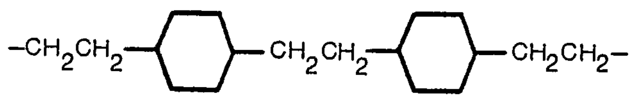 , 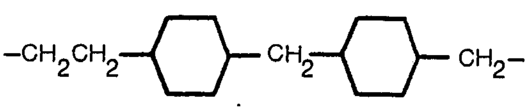 ,

$C_6$—$C_{12}$ arylene, or $C_8$—$C_{14}$ aralkylene; with the proviso that at least one $R^1$ substituent is, or contains

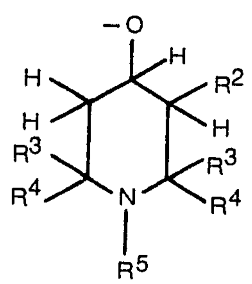 or 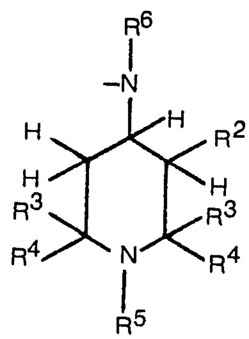 ,

The invention also relates to the use of such polymeric compositions for stabilizing polymers, particularly polyolefins, against degradation by ultraviolet radiation, and to the stabilized compositions.

The preferred monomers of formula (I) are those wherein Y and Y′ are

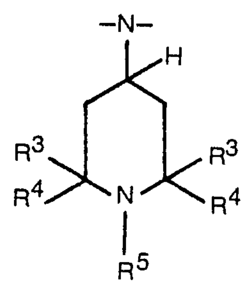 (I)

The especially preferred monomers of formula (I) are represented by formula (II)

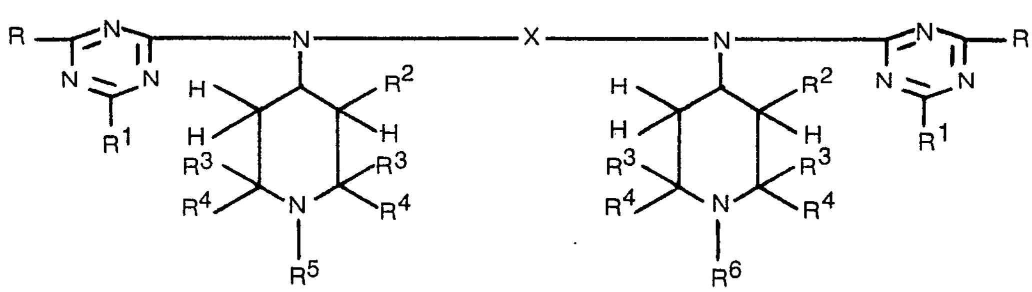 (II)

The most especially preferred monomers are represented by formula (III)

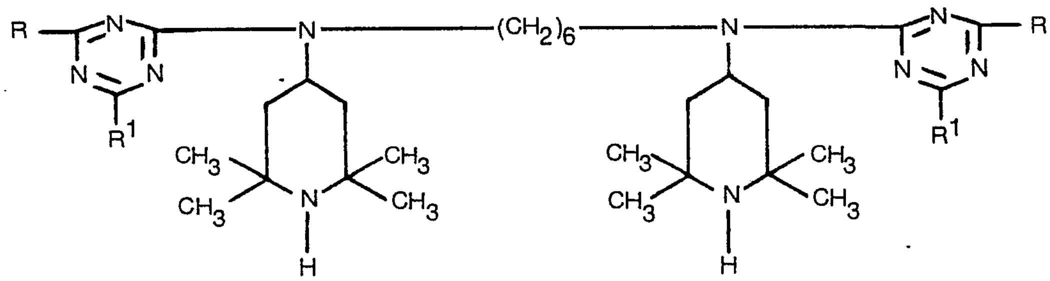

(III)

It is well-known that sunlight and other sources of ultraviolet radiation cause degradation of polymers as evidenced by embrittlement or yellowing of plastic articles made therefrom. It is also well-known that this degradation can be inhibited by use of ultraviolet light stabilizers incorporated in or on such articles. Various additives, used alone or in combinations, have been suggested to inhibit such light degradation in order to prolong the useful lives of articles made from polymers. Since none has been found to be completely satisfactory, research continues in order to find compounds, or combinations of compounds, which will be more satisfactory. The present invention arose out of such research and resulted in the discovery of novel compounds and polymers which stabilize polymers against degradation by ultraviolet light.

The stabilizers of the present invention offer the following advantages:

(1) excellent light-stabilizing activity,

(2) excellent compatibility with resins,

(3) low volatility,

(4) low extractability from polymers by laundering of dry cleaning, and

(5) excellent oven-aging stability.

W. German Offen. 2,308,611 discloses bridged 1,3,5-triazines containing allyloxy, methallyloxy, or propallyloxy substituents.

Beyer and Lemke Chem. Ber. 99(7), 2123—6 (1966) disclose bridged 1,3,5-triazines containing methallyl substituents.

U.S. Patents 2,712,004 and 4,086,204 disclose respectively, the polymerization of allyl melamines and polytriazine compositions containing a tetraalkyl piperidine, as light stabilizers for polymers.

US—A—4,234,728 discloses the use of polyalkylpiperidine derivatives of s-triazines having at least one N-methylolamino group and the ethers thereof as light stabilizers for plastics.

The monomers of formula (I) may be prepared by reacting two moles of an appropriately substituted chloro-1,3,5-triazine of formula (IV) with one mole of an appropriately substituted diol, or diamine, of formula (V), as illustrated by the following reaction, wherein R, R′, X, Y, and Y′ are as previously defined.

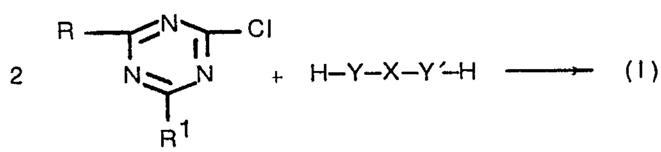


(IV) (V)

The preparation of suitable compounds of formulas (IV) and (V) is well-known in the art. The preparation of 4,4′-(hexamethylenediimino)bis(2,2,6,6-tetramethylpiperidine), also known as N,N′-bis-(2,2,6,6-tetramethyl-4-piperidyl)hexamethylenediamine, is disclosed in U.S. Patent 4,104,248.

Some monomers of formula (I) may be prepared by reacting a compound of formula (VI) with an appropriate amine or alcohol, as shown below.

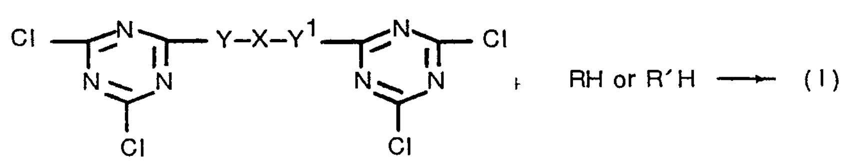


(VI)

The compounds of Formula (VI) may be prepared from cyanuric chloride and an appropriate diol, or diamine, by conventional methods.

Illustrative examples of suitable monomers of formula (I) include the following:

2,2'(ethylenebis(2,2,6,6,-tetramethyl-4-piperidinyl)imido]]bis[4-allylamino-6-(2-cyanoethyl)amino-1,3,5-triazine],

2;2'-[hexamethylenebis[2,2,6,6-tetramethyl-4-piperidinyl)amino]]bis(4-diallylamino-6-*n*-hexyl-1,3,5-triazine),

2,2'-[thiodiethylenebis[(2,2,6,6-tetraethyl-4-piperidinyl)imino]]bis[4-allylamino-6-(2-aminoethyl)amino-1,3,5-triazine],

2,2'-[oxydihexamethylenebis[(2,2,6,6-tetramethyl-4-piperidinyl)imino]]bis-(4,6-diallyloxy-1,3,5-triazine),

2,2'-[hexamethylenebis[(2,2,6,6-tetramethyl-4-piperidinyl)imino]]bis[4-allyloxy-6-(2-carboxyethyl)amino-1,3,5-triazine],

2,2'-[hexamethylenebis[(2,2,6,6-tetramethyl-4-piperidinyl)imino]]bis(4-diallylamino-6-*t*-octylamino-1,3,5-triazine),

2,2'-[tetramethylenebis[1-(2-hydroxyethyl)-2,2,6,6-tetramethyl-4-piperidinyl]imino]bis(4,6-dimethallyloxy-1,3,5-triazine),

2,2'-[hexamethylenebis[(1-oxy-2,2,6,6-tetramethyl-4-piperidinyl)imino]]bis-(4,6-(3-butenyl)amino-1,3,5-triazine),

2,2'-[hexamethylenebis[(1-hydroxy-2,2,6,6-tetramethyl-4-piperidinyl)imino]]bis(4,6-diallylamino-1,3,5-triazine),

2,2'-[hexamethylenebis[(2,2,6,6-tetramethyl-4-piperidinyl)imino]]bis-(4-diallylamino-6-methoxy-1,3,5-triazine),

2,2'-[hexamethylenebis[(2,2,6,6-tetramethyl-4-piperidinyl)imino]]bis(4-allyloxy-6-diethylamino-1,3,5-triazine),

2,2'-[trimethylenebis[(2,2,6,6-tetramethyl-4-piperidinyl)imino]]bis(4-allyloxy-6-*n*-butoxy-1,3,5-triazine),

2,2'-[hexamethylenebis[(2,2,6,6-tetramethyl-4-piperidinyl)imino]]bis(4,6-dimethallyloxy-1,3,5-triazine),

2,2'-[hexamethylenebis[(2,2,6,6-tetramethyl-4-piperidinyl)imino]]bis(4-chloro-6-dimethallylamino-1,3,5-triazine),

2,2'-[hexamethylenebis[(2,2,6,6-tetramethyl-4-piperidinyl)imino]]bis(4,6-di(5-hexenyl)amino-1,3,5-triazine),

2,2'-(hexamethylenediimino)bis[4-allyloxy-6-(2,2,6,6-tetramethyl-4-piperidinyl)amino-1,3,5-triazine],

2,2'-(hexamethylenediimino)bis[4-methallyloxy-6-(2,2,6,6-tetraethyl-4-piperidinyl)amino-1,3,5-triazine],

2,2'-(hexametylenediimino)bis[4-methallyloxy-6-(2,2,6,6-tetramethyl-4-piperidinyl)oxy-1,3,5-triazine],

2,2'-[ethylenebis[(2,2,6,6-tetramethyl-4-piperidinyl)imino]]bis[4,6-di(3-butenyl)amino-1,3,5-triazine],

2,2'-[hexamethylenebis[(2,2,6,6-tetramethyl-4-piperidinyl)imino]]bis(4-allyloxy-6-ethylthio-1,3,5-triazine),

2,2'-[hexamethylenebis[(2,2,6,6-tetramethyl-4-piperidinyl)imino]]bis(4-allylamino-6-morpholino-1,3,5-triazine),

2,2'-[dodecamethylenebis[(2,2,6,6-tetramethyl-4-piperidinyl)imino]]bis(4-diallylamino-6-piperidino-1,3,5-triazine),

2,2'-[hexamethylenebis[(2,2,6,6-tetramethyl-4-piperidinyl)imino]]bis(4-diallylamino-6-pyrrolidyl-1,3,5-triazine),

2,2'-[1,4-cyclohexylenebis[(2,2,6,6-tetramethyl-4-piperidinyl)imino]]bis[4-diallylamino-6-(2-ethoxycarbonylethylamino)-1,3,5-triazine],

2,2'-(hexamethylenediimino)bis[4-allyloxy-6-(2,2,3,6,6-pentamethyl-4-piperidinyl)amino-1,3,5-triazine],

2,2'-[1,4-cyclohexylenebis(methylene)]bis[4-allylamino-6-(2-benzyl-2,6,6-trimethyl-4-piperidinyl)amino-1,3,5-triazine],

2,2'-(hexamethylenediimino)bis[4-allylamino-6-(7-azadispiro[5.1.5.3]hexadecan-15-yl)-amino-1,3,5-triazine],

2,2'-[1,4-cyclohexylenebis(ethylene)]bis[4-allylamino-6-(2,2,6,6-tetramethyl-4-piperidinyl)amino-1,3,5-triazine],

2,2'-[1,4-(phenylenedimethylene)bis-[(2,2,6,6-tetramethyl-4-piperidinyl)imino]]bis(4,6-dimethylallyloxy-1,3,5-triazine),

2,2'-[hexamethylenebis(methylimino)]bis[4-allylamino-6-(2,2,6,6-tetramethyl-4-piperidinyl)amino-1,3,5-triazine],

2,2'-[hexamethylenebis(n-hexylimino)]bis[4-diallylamino-6-(2,2,6,6-tetramethyl-4-piperidinyl)amino-1,3,5-triazine],

2,2'-(hexamethylenedioxy)bis[4-diallylamino-6-(2,2,6,6-tetramethyl-4-piperidinyl)amino-1,3,5-triazine],

2,2'-(ethylenedioxy)bis[4-allyloxy-6-(2,2,6,6-tetramethyl-4-piperidinyl)amino-1,3,5-triazine],

2,2'-(dodecamethylenedioxy)bis[4-diallylamino-6-(2,2,6,6-tetramethyl-4-piperidinyl)amino-1,3,5-triazine],

2,2'-(thiodiethylenedioxy)bis[4-diallylamino-6-(2,2,6,6-tetramethyl-4-piperidinyl)-oxy-1,3,5-triazine],

2,2'-[hexamethylenebis[(2-benzyl-2,6,6-trimethyl-4-piperidinyl)imino)]bis(4,6-diallyloxy-1,3,5-triazine),

2,2'-[methylenedi-4,1-cyclohexylenebis[(2,2,6,6-tetramethyl-4-piperidinyl)imino]]bis(4-allylamino-6-t-octylamino-1,3,5-triazine),

2,2'-[hexamethylenebis[(2,2,6,6-tetramethyl-4-piperidinyl)imino]]bis(4-allylamino-6-t-octylamino-1,3,5-triazine),

2,2,'-[hexamethylenebis[(2,2,6,6-tetramethyl-4-piperidinyl)imino]]bis(4,6-di-allylamino-1,3,5-triazine),

2,2'-[ethylenebis[(2,2,6,6-tetramethyl-4-piperidinyl)imino]]bis(4-allyloxy-6-t-octylamino-1,3,5-triazine),

2,2'-[ethylenebis[(2,2,6,6-tetramethyl-4-piperidinyl)imino]]bis(4,6-di-allylamino-1,3,5-triazine),

2,2'-(hexamethylenediimino)bis[4-allylamino-6-[[6-[(2,2,6,6-tetramethyl-4-piperidinyl)amino]hexyl]amino]-1,3,5-triazine], and

2,2'-(hexamethylenediimino)bis[4-allyloxy-6-[[6-[2,2,6,6-tetramethyl-4-piperidinyl)oxy]hexyl]amino]-1,3,5-triazine, and the like.

In preparing the polymers of the present invention, a monomer of formula (I), or a mixture of a monomer of formula (I) and any copolymerizable comonomer, is polymerized employing an effective amount of a polymerization catalyst. Suitable polymerization catalysts include 2,2'-azobisisobutyronitrile, di-(t-butyl)peroxide, dilaurylperoxide, lauroyl peroxide, benzoyl peroxide, acetyl peroxide, t-butyl hydrogen peroxide, ammonium persulfate, potassium persulfate, and the like. The preferred catalyst is 2,2'-azobisisobutyronitrile.

The monomer of formula (I) may be homopolymerized, or copolymerized by utilizing a copolymerizable comonomer, in emulsion or solution by conventional methods. Suitable comonomers are disclosed in U.S. Patent 2,712,004.

The polymers of this invention are useful as light stabilizers for thermoplastic substrates such as polyolefins, polyesters, polyethers, polyurethanes, polystyrenes and high-impact polystyrenes. Preferably, the thermoplastic substrate is a polyolefin.

Other organic materials susceptible to degradation by the effects of light, the properties of which are improved by the incorporation therein of a compound of this invention, include natural and synthetic rubbers; the latter include, for example, homo-, co- and terpolymers of acrylonitrile, butadiene and styrene, and blends thereof.

The polymers formed from the monomer of formula (I) are particularly useful in polyolefins, such as polyethylene, polypropylene, polybutylene, and the like, and copolymers thereof.

Generally, the compositions comprise a polymer containing from about 0.1% to about 5% by weight of the polymer formed from the monomer of formula (I) based on the weight of the polymeric substrate.

Preferably, the composition comprises a polyolefin containing from about 0.2% to about 2% by weight of the polymer formed from the monomer of formula (I), based on the weight of the polyolefin substrate.

Optionally, the compositions may contain other additives, especially additives useful in polyolefins, such as antioxidants, supplemental light stabilizers, plasticizers, flame retardants, antistatic and antislipping agents, fillers, dyes and pigments.

Suitable antioxidants include those of the hindered phenol type, such as 2,6-di-t-butyl-p-cresol; 4,4'bis(2,6-di-t-butylphenyl); 4,4'-bis(2,6-diisopropylphenol); 2,4,6-tri-t-butylphenol; 2,2'-thiobis(4-methyl-6-t-butylphenol); octadecyl 2(3',5'-di-t-butyl-4'-hydroxyphenyl)propionate, 1,3,5-tris(4-t-butyl-3-hydroxy-2,6-dimethyl-benzyl)-s-triazine-2,4,6-(1H,3H,5H)-trione; esters of thiodipropionic acid, such as dilauryl thiodipropionate and distearyl thiodipropionate; hydrocarbyl phosphites, such as triphenyl phosphite, trinonyl phosphite, diisodecyl pentaerythrityl diphosphite, diphenyldecyl phosphite; and combinations thereof.

Suitable supplemental light stabilizers include those of the benzotriazole class, such as 2-(2'-hydroxy-5'-t-octylphenyl)benzotriazole; 2-(2'-hydroxy-3',5'-di-t-butylphenyl)-5-chlorobenzotriazole; those of the hydroxybenzophenone type, such as 2-hydroxy-4-methoxybenzophenone; 2-hydroxy-4-octyloxybenzophenone; 2,2'-dihydroxy-4,4'-dimethoxybenzophenone; hindered phenol esters, such as n-hexadecyl 3,5-di-t-butyl-4-hydroxybenzoate, and 2',4'-di-t-butylphenyl 3,5-di-t-butyl-4-hydroxybenzoate; metal complexes, such as nickel complexes of 2,2'-thiobis(4-t-octylphenol); nickel butylamine complex of 2,2'thiobis(4-t-octylphenol); nickel complexes of bis(4-t-octylphenyl)sulfone; nickel dibutyl dithiocarbamate; nickel salts of 4-hydroxy-3,5-di-t-butylbenzyl phosphonic acid monoalkyl esters where alkyl is methyl, ethyl, propyl, butyl; nickel complex of 2-hydroxy-4-methylphenyl undecyl ketone oxime. Further illustrative examples of suitable antioxidants and supplemental light stabilizers can be found in columns 3 and 4 of U.S. Patents 3,488,290 and 3,496,134 and in the other patents mentioned therein.

As with the polymers formed from the monomer of formula (I), the additive is advantageously employed withes advantageously employed within the range from about 0.2% to about 2% by weight, based on the weight of the untreated polymer.

The polymers formed from the monomer of formula (I) may be incorporated into the polymeric substrate by any of the known techniques for compounding additives with a polymer. For example, the polymer may be compounded by dry blending with the polymer substrate in powder or granular form, followed by milling, Banbury mixing, molding, casting, extruding and swelling. Alternatively, the additive may be added, as a solution or slurry in a suitable inert solvent, or dispersant, to the polymeric substrate in powder or granular form, the whole mixed intimately in a mixer, and the solvent subsequently removed. As a further possibility, the additive may be added to the polymeric substrate during the preparation of the latter, for instance at the latex stage of polymer production, to provide prestabilized polymer material.

The following examples illustrate the present invention. All parts and percentages are by weight unless otherwise indicated.

Preparative Example 1

Preparation of 2,2'-[Hexamethylenebis[(2,2,6,6-tetramethyl-4-piperidinyl)imino]]bis(4,6-diallylamino-1,3,5-triazine)

A mixture of 2,4-bis(diallylamino)-6-chloro-1,3,5-triazine (14.2 grams; 0.046 mole), 4,4'-(hexamethylenediimino)bis(2,2,6,6-tetramethylpiperidine) (9.2 grams; 0.023 mole), powdered sodium hydroxide (1.84 grams; 0.046 mole), and xylene (50 mls) is heated at reflux for 36 hours using a water separator to remove byproduct water. The reaction mixture is then filtered hot and the filtrate is evaporated to obtain a light yellow oil which solidifies on standing. Recrystallization of the solid from hexane gives white needles which on recovery and drying weigh 9.3 grams, mp 119—120°C.

| | | | |
|---|---|---|---|
| Calculated for $C_{54}H_{88}N_{14}$: | C, 69.53%; | H, 9.44%; | N, 21.03% |
| Found: | C, 69.45%; | H, 9.44%; | N, 20.86% |

Preparative Example 2

Preparation of 2,2'-[Hexamethylenebis[(2,2,6,6-tetramethyl-4-piperidinyl)imino]]bis(4-diallylamino-6-methoxy-1,3,5-triazine)

A mixture of 2-diallylamino-4-chloro-6-methoxy-1,3,5-triazine (21.6 grams; 0.09 mole), 4,4'-(hexamethylenediimino)bis(2,2,6,6-tetramethylpiperidine) (17.9 grams; 0.045 mole), powdered sodium hydroxide (3.6 gramms; 0.09 mole), and xylene (150 mls) is heated at reflux for 24 hours using a water separator to remove water therefrom. The reaction mixture is then processed as described in Example 1 to obtain 21.3 grams of crystalline product, mp 113°—115°C.

| | | | |
|---|---|---|---|
| Calculated for $C_{44}H_{74}N_{12}O_2$: | C, 65.82%; | H, 9.23%; | N 20.95% |
| Found: | C, 65.61%; | H, 8.95%; | N, 21.12% |

Preparative Example 3

Preparation of 2,2'-[Hexamethylenebis[(2,2,6,6-tetramethyl-4-piperidinyl)imino]]bis(4-diallylamino-6-t-octylamino-1,3,5-triazine)

A stirred solution of 4,4'(hexamethylenediimino)bis(2,2,6,6-tetramethylpiperidine) (9.5 grams; 0.024 mole), 2-diallylamino-4-chloro-6-t-octylamino-1,3,5-triazine (16.0 grams; 0.048 mole), and powdered sodium hydroxide (2.0 grams; 0.05 mole) in xylene (150 mls) is heated at reflux for 244 hours while removing by-product water by means of a trap. The resulting mixture is then filtered and the filtrate is heated to evaporate the solvent and obtain a light tan oil which solidifies on triturating with petroleum ether. The solid is then recovered and dried to obtain 4.6 grams of the desired product, mp 113—115°C.

| | | | |
|---|---|---|---|
| Calculated for $C_{58}H_{104}N_{14}$: | C, 69.87%; | H, 10.44%; | N, 19.68% |
| Found: | C, 69.70%; | H, 11.02%; | N, 19.78% |

Preparative Example 4

Preparation of 2,2'-[Hexamethylenebis[(2,2,6,6-tetramethyl-4-piperidinyl)imino]]bis(4-allyloxy-6-t-octylamino-1,3,5-triazine)

A stirred mixture of 4,4'(hexamethylenediimino)bis(2,2,6,6-tetramethylpiperidine) (10.0 grams; 0.025 mole), 2-allyloxy-4-chloro-6-t-octylamino-1,3,5-triazine (15.1 grams; 0.05 mole), and powdered sodium hydroxide (2.0 grams; 0.05 mole) in xylene (150 mls) is heated at reflux for 24 hours while removing by-product water by means of a trap. The reaction mixture is filtered while hot to remove insolubles. Upon cooling the filtrate, a white crystalline solid precipitates. The solid is recovered by filtration and dried to obtain 15.7 grams of the desired product, mp 210—212°C.

| | | | |
|---|---|---|---|
| Calculated for $C_{52}H_{92}N_{12}O_2$: | C, 68.12%; | H, 10.04%; | N, 18.34% |
| Found: | C, 68.56%; | H, 10.83%; | N, 17.75% |

Preparative Example 5

Preparation of 2,2'-[Hexamethylenebis[(2,2,6,6-tetramethyl-4-piperidinyl)imino]]bis(4-allylamino-6-t-octylamino-1,3,5-triazine)

A stirred mixture of 4,4'-(hexamethylenediimino)bis(2,2,6,6-tetramethylpiperidine) (8.0 grams; 0.0202 mole) in xylene (75 mls) is heated at reflux for 2 hours while removing water therein by means of a water trap. Powdered sodium hydroxide (1.62 grams; 0.0404 mole) and 2,4-di-allylamino-6-chloro-1,3,5-triazine (9.1 grams; 0.0404 mole) are added to the xylene and stirring and heating at reflux is continued for 18 hours. The reaction mixture is then cooled to 25°C, and acetonitrile (200 mls) and water (50 mls) are added. The mixture is then stirred and heated at reflux for one hour, cooled to 25°C, and allowed to settle. The aqueous phase is then separated and the organic phase is washed with water. The aqueous phase is separated again and the organic phase is dried over anhydrous sodium sulfate. The mixture is filtered and

the filtrate is concentrated to about 50 mls. On standing crystals are deposited which after recovery, rinsing with diethyl ether and drying weigh 8.2 grams, mp 160—162°C. Recrystallization from xylene gives a melting point of 161—162°C.

| | | | |
|---|---|---|---|
| Calculated for $C_{42}H_{72}N_{14}$: | C, 65.24%; | H, 9.39%; | N, 25.37% |
| Found: | C, 65.83%; | H, 9.40%; | N, 24.76% |

Preparative Example 6

Preparation of 2,2′-[Hexamethylenebis[(2,2,6,6-tetramethyl-4-piperidinyl)imino]]bis(4,6-di-allylamino-1,3,5-triazine)

A stirred mixture of 4,4′(hexamethylenediimino)bis(2,2,6,6-tetramethylpiperidine) (6.36 grams; 0.0161 mole), 2-chloro-4,6-bis(t-octylamino)-1,3,5-triazine (9.56 grams; 0.0322 mole), and powdered sodium hydroxide (1.29 grams; 0.0322 mole) in xylene (75 mls) is stirred and heated at reflux while removing water therein by means of a water trap. The reaction mixture is stirred and heated at reflux for 18 hours, cooled to 25°C, and treated with acetonitrile (200 mls). The reaction mixture is filtered to recover a precipitate, and the solid is washed successively with water and acetone, and dried to obtain 10.0 grams of product which melts at 208—209°C after recrystallization from xylene.

| | | | |
|---|---|---|---|
| Calculated for $C_{52}H_{94}N_{14}$: | C, 68.22%; | H, 10.35%; | N, 21.43% |
| Found: | C, 69.11%; | H, 10.48%; | N, 19.81% |

Example 1

Polymer of 2,2′-[Hexamethylenebis[(2,2,6,6-tetramethyl-4-piperidinyl)imino]]bis(4,6-diallylamino-1,3,5-triazine)

Dry dioxane (13 grams) is purged with nitrogen for 45 minutes, and 2,2′-[hexamethylenebis[(2,2,6,6-tetramethyl-4-piperidinyl)imino]]bis(4,6-diallylamino-1,3,5-triazine) (9.5 grams) is added thereto. The mixture is purged with nitrogen for an additional 35 minutes, and the nitrogen stream is then directed above the surface of the mixture. The temperature is raised to dissolve the crystals and then 2,2′-azobisisobutyronitrile (0.42 gram) is added to the solution. The temperature is raised to 65°C and held there for 24 hours while stirring and passing nitrogen over the surface of the reaction mixture. The gel-like insoluble material is recovered by filtration, stirred in petroleum ether, recovered again by filtration and dried to obtain 3.5 grams of polymer which does not melt at up to 300°C.

Example 2

Polymer of 2,2′-[Hexamethylenebis[(2,2,6,6-tetramethyl-4-piperidinyl)imino]]bis(4,6-diallyloxy-1,3,5-triazine)

A mixture of 2,2′-[hexamethylenebis[(2,2,6,6-tetramethyl-4-piperidinyl)imino]]bis(4,6-diallyloxy1,3,5-triazine) (8.0 grams) and dioxane (15 mls) is purged with nitrogen for 30 minutes and 2,2′-azobisisobutyronitrile (1.0 gram) is added thereto. The reaction mixture is stirred and heated at 60°C for 68 hours while passing a stream of nitrogen above the surface of the mixture. An additional 0.5 gram of 2,2′-azobisisobutyronitrile is then added to the mixture and heating is continued at 60°C for 24 hours. An additional 0.5 gram of 2,2′-azobisisobutyrontrile is added to the mixture and heating is continued at 60°C for another 24 hours. The reaction mixture is then poured into petroleum ether (200 mls) and the resultant solid is recovered by filtration and dried in a vacuum oven. The product softens at 120°C and decomposes at 156—160°C. It has a molecular weight of 3000.

Example 3

Polymer of 2,2′-[Hexamethylenebis[(2,2,6,6-tetramethyl-4-piperidinyl)imino]]bis(4-diallylamino-6-methoxy-1,3,5-triazine)

2,2′-[Hexamethylenebis[(2,2,6,6-tetramethyl-4-piperidinyl)imino]]bis(4-diallylamino-6-methoxy-1,3,5-triazine) (10 grams) is dissolved in dry dioxane (15 grams) at 40°C and the solution is purged with dry nitrogen for 30 minutes. The solution is heated to 60°C, under a nitrogen atmosphere, and 2,2′-azobisisobutyrontrile (0.5 gram) is added thereto. The reaction mixture is then stirred at 60°C for 24 hours. At this point, additional 2,2′-azobisisobutyronitrile (0.25 gram) is added to the reaction mixture and stirring is continued at 60°C for another 24 hours. An additional 0.25 gram of 2,2′-azobisisobutyronitrile is added and stirring is continued at 60°C for another 24 hours. The reaction mixture is then added to petroleum ether (200 mls) and the resulting white precipitate is recovered by filtration and dried under vacuum to obtain 5.6 grams of product which softens at 110°C and effervesces at 160—170°C.

Examples 4—6

Testing in Polypropylene

The compounds of Examples 1—3 (0.25 gram) are separately dry blended with a mastermix of 100 grams of unstabilized polypropylene (Pro-fax® 6401) and 0.1 gram of a processing antioxidant, 2,4,6-tri-t-butylphenol. The blend is milled at 177—188°C (350—370°F) for five minutes, and then compression molded at 204°C (400°F) into a film 101.6 to 127 μm (4—5 mils) thick. The film and a control film, identically

prepared without the compound under test, are exposed to a xenon arc in an Atlas Weather-Ometer® until they fail. A film is considered as having failed when the carbonyl content of the infrared absorption spectrum increases by 0.10 weight percent, a generally accepted point of film embrittlement.

The data in the Table show the number of hours required to increase the carbonyl content by 0.1% by weight for the compounds under test and a control film.

TABLE

| Example | Additive | Hours to Failure |
|---|---|---|
| 4 | Product of Example 1 | 300 |
| 5 | Product of Example 2 | 400 |
| 6 | Product of Example 3 | 600 |
| | None | <200 |

**Claims for the Contracting States: BE CH DE FR GB IT LI NL SE**

1. A polymer prepared by polymerizing, optionally with a comonomer, a monomer of the formula (I)

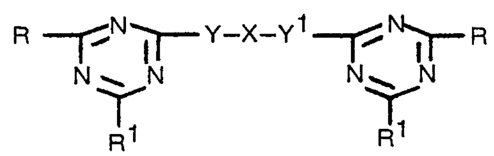

(I)

wherein R represents $C_3$—$C_6$ alkenyloxy, $C_3$—$C_6$ alkenylamino, or di($C_3$—$C_6$ alkenyl)amino; $R^1$ represents $C_1$—$C_8$ alkyl, $C_1$—$C_8$ alkoxy, halo, $C_1$—$C_8$ alkylthio, $C_3$—$C_6$ alkenyloxy, amino, $C_3$—$C_6$ alkenylamino, di($C_3$—$C_6$ alkenyl)amino, the groups

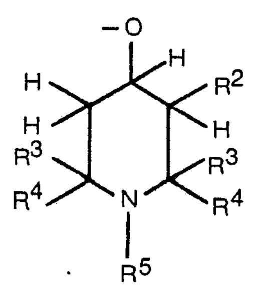

or

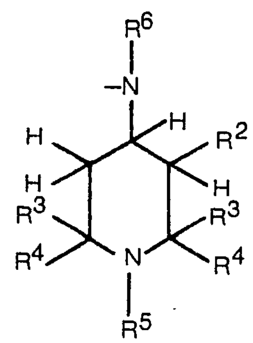

wherein $R^2$, $R^3$, $R^4$, $R^5$, and $R^6$ are as defined below, $C_1$—$C_{18}$ alkylamino, di($C_1$—$C_{18}$)alkylamino, morpholino, pyrrolidyl, piperidino, a substituted $C_1$—$C_{18}$ alkylamino, or a substituted di($C_1$—$C_{18}$)alkylamino, wherein the substituents are selected from amino, cyano, carboxy, alkoxycarbonyl wherein the alkoxy moiety has 1 to 8 carbon atoms, and the groups

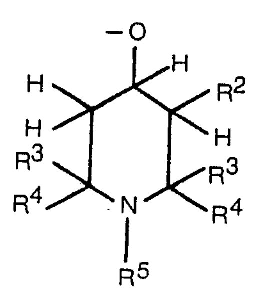

or

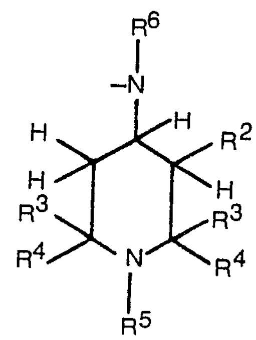

wherein $R^2$ represents hydrogen, $C_1$—$C_8$ alkyl, or benzyl; $R^3$ and $R^4$ independently represent $C_1$—$C_8$ alkyl, benzyl, or phenethyl, or together with the carbon to which they are attached form a $C_5$—$C_{10}$ cycloalkyl; and

$R^5$ represents hydrogen, $C_2$—$C_3$ hydroxyalkyl, $C_1$—$C_8$ alkyl, hydroxyl, or oxyl; $R^6$ represents hydrogen, $C_1$—$C_8$ alkyl, or

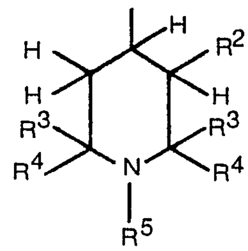

wherein $R^2$, $R^3$, $R^4$, and $R^5$ are as previously defined; Y and $Y^1$, which may be the same, or different, represent oxy, or

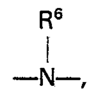

wherein $R^6$ is as previously defined; X represents $C_2$—$C_{12}$ alkylene, wherein the alkylene chain may be interrupted by an oxy, thio, or

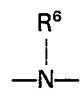

radical, $C_5$—$C_{10}$ cycloalkylene,

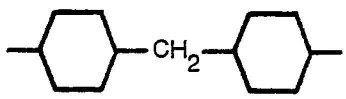 , 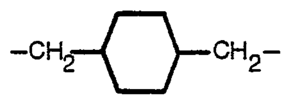 , 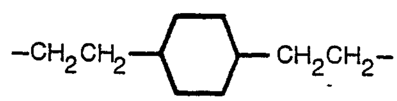 ,

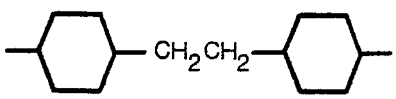 , 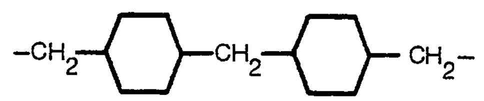 ,

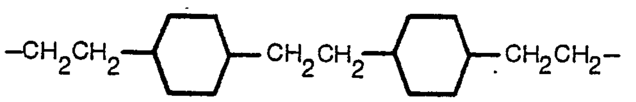 , 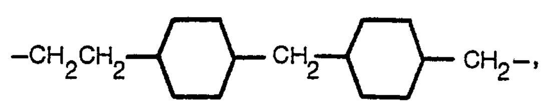

$C_6$—$C_{12}$ arylene, or $C_8$—$C_{14}$ aralkylene; with the proviso that at least one $R^1$ substituent is, or contains

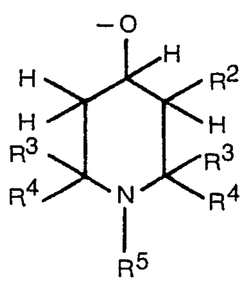 or 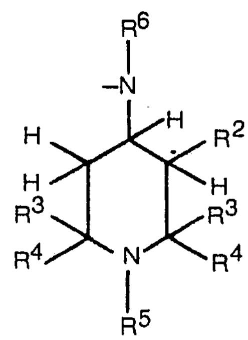

2. The polymer of Claim 1 wherein Y and $Y^1$ are each

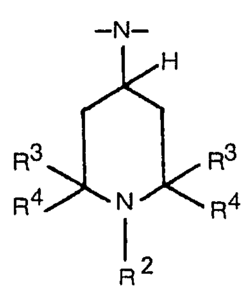

3. The polymer of Claim 2 wherein $R^3$ and $R^4$ are each methyl, $R^5$ is hydrogen, and X is $C_2$—$C_{12}$ alkylene.

4. A method for stabilizing a polymer which is normally subject to degradation by ultraviolet radiation which comprises incorporating into said polymer an ultraviolet stabilizingly effective amount of a polymer of Claim 1.

5. The method of Claim 4 wherein the polymer to be stabilized is a polyolefin.

**Claims for the Contracting State: AT**

1. A process for preparing a polymer by polymerizing, optionally with a comonomer, a monomer of the formula I

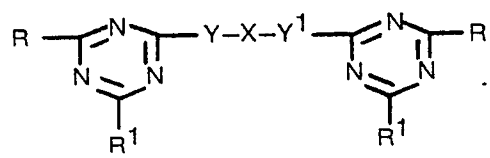

(I)

wherein R represents $C_3$—$C_6$ alkenyloxy, $C_3$—$C_6$ alkenylamino, or di($C_3$—$C_6$ alkenyl)amino; $R^1$ represents $C_1$—$C_8$ alkyl, $C_1$—$C_8$ alkoxy, halo, $C_1$—$C_8$ alkylthio, $C_3$—$C_6$ alkenyloxy, amino, $C_3$—$C_6$ alkenylamino, di($C_3$—$C_6$ alkenyl)amino, the groups

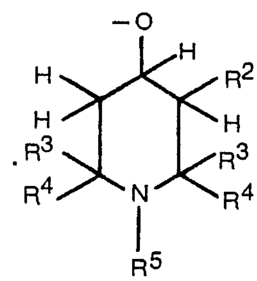

or.

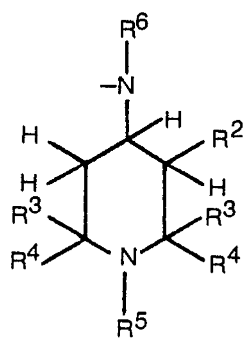

wherein $R^2$, $R^3$, $R^4$, $R^5$, and $R^6$ are as defined below, $C_1$—$C_{18}$ alkylamino, di($C_1$—$C_{18}$)alkylamino, morpholino, pyrrolidyl, piperidino, a substituted $C_1$—$C_{18}$ alkylamino, or a substituted di($C_1$—$C_{18}$)alkylamino, wherein the substituents are selected from amino, cyano, carboxy, alkoxycarbonyl wherein the alkoxy moiety has 1 to 8 carbon atoms, and the groups

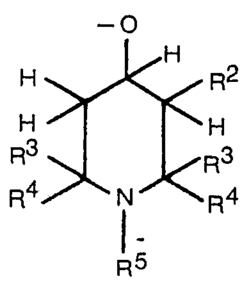

or

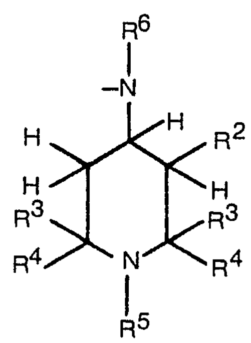

wherein $R^2$ represents hydrogen, $C_1$—$C_8$ alkyl, or benzyl; $R^3$ and $R^4$ independently represent $C_1$—$C_8$ alkyl, benzyl, or phenethyl, or together with the carbon to which they are attached form a $C_5$—$C_{10}$ cycloalkyl; and $R^5$ represents hydrogen, $C_2$—$C_3$ hydroxyalkyl, $C_1$—$C_8$ alkyl, hydroxyl, or oxyl; $R^6$ represents hydrogen, $C_1$—$C_8$ alkyl, or

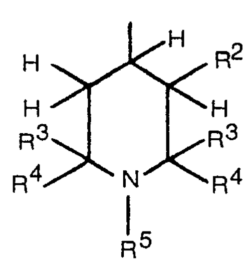

wherein $R^2$, $R^3$, $R^4$, and $R^5$ are as previously defined; Y and $Y^1$, which may be the same, or different, represent oxy, or

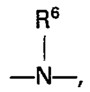

wherein $R^6$ is as previously defined; X represents $C_2$—$C_{12}$ alkylene, wherein the alkylene chain may be interrupted by an oxy, thio, or

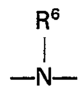

radical, $C_5$—$C_{10}$ cycloalkylene,

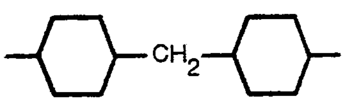 , 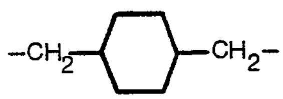 , 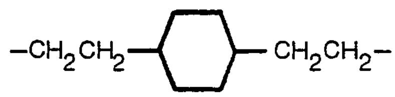 ,

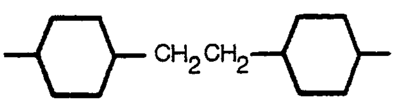 , 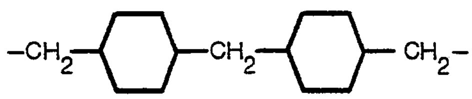 ,

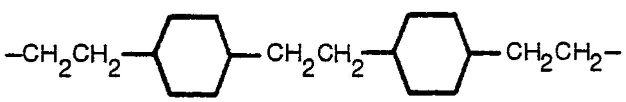 , 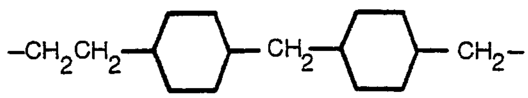 ,

$C_6$—$C_{12}$ arylene, or $C_8$—$C_{14}$ aralkylene; with the proviso that at least one $R^1$ substituent is, or contains

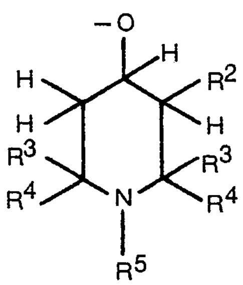 or 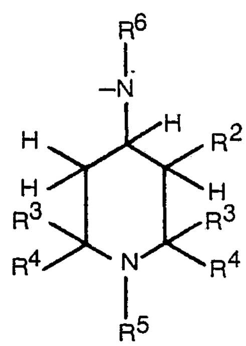

2. The process of claim 1, wherein Y and $Y_1$ are each

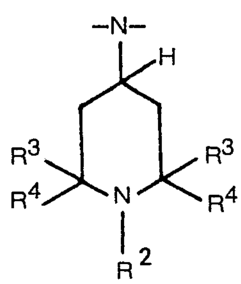

3. The process of claim 1, wherein $R^3$ and $R^4$ are each methyl, $R^5$ is hydrogen, and X is $C_2$—$C_{12}$ alkylene.

4. A method for stabilizing a polymer which is normally subject to degradation by ultraviolet radiation which comprises incorporating into said polymer an ultraviolet stabilizingly effective amount of a polymer of claim 1.

5. The method of Claim 4 wherein the polymer to be stabilized is a polyolefin.

**Patentansprüche für die Vertragsstaaten: BE CH DE FR GB IT LI NL SE**

1. Ein Polymeres, hergestellt durch Polymerisation eines Monomeren der Formel I, gegebenenfalls zusammen mit einem Comonomeren

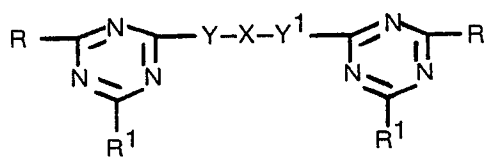

(I)

wobei R für $C_3$—$C_6$-Alkenyloxy, $C_3$—$C_6$-Alkenylamino oder Di($C_3$—$C_6$-alkenyl)amino steht; $R^1$ für $C_1$—$C_8$-Alkyl, $C_1$—$C_8$-Alkoxy, Halo, $C_1$—$C_8$-Alkylthio, $C_3$—$C_6$-Alkenyloxy, Amino, $C_3$—$C_6$-Alkenylamino, Di($C_3$—$C_6$-alkenyl)amino, die Gruppen

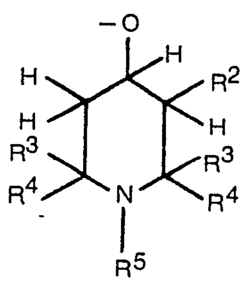

oder

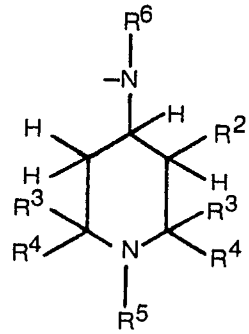

wobei $R^2$, $R^3$, $R^4$, $R^5$ und $R^6$ wie weiter unten definiert sind, $C_1$—$C_{18}$-Alkylamino, Di($C_1$—$C_{18}$)alkylamino, Morpholino, Pyrrolidyl, Piperidino, ein substituiertes $C_1$—$C_{18}$-Alkylamino oder ein substituiertes (Di($C_1$—$C_{18}$)alkylamino steht, wobei die Substituenten ausgewählt sind unter Amino, Cyano, Carboxy, Alkoxycarbonyl, wobei die Alkoxyeinheit 1 bis 8 Kohlenstoffatome hat, und den Gruppen

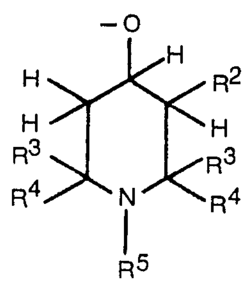

oder

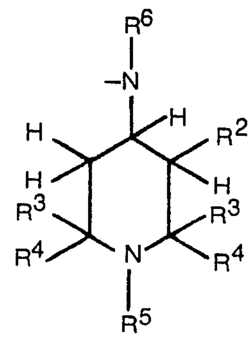

wobei $R^2$ für Wasserstoff, $C_1$—$C_8$-Alkyl oder Benzyl steht; $R^3$ und $R^4$ unabhängig für $C_1$—$C_8$-Alkyl, Benzyl oder Phenethyl stehen oder gemeinsam mit dem Kohlenstoffatom, an das sie gebunden sind, ein $C_5$—$C_{10}$-Cycloalkyl bilden; und $R^5$ für Wasserstoff, $C_2$—$C_3$-Hydroxyalkyl, $C_1$—$C_8$-Alkyl, Hydroxyl oder Oxyl steht; $R^6$ für Wasserstoff, $C_1$—$C_8$-Alkyl oder

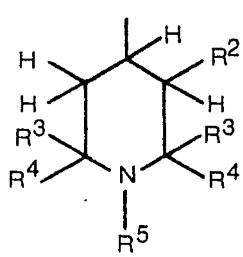

steht, wobei $R^2$, $R^3$, $R^4$ und $R^5$ wie vorstehend definiert sind; Y und $Y^1$, welche gleich oder verschieden sein können, für Oxy oder

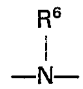

stehen, wobei $R^6$ wie vorstehend definiert ist; X für $C_2$—$C_{12}$-Alkylen steht, wobei der Alkylenkette unterbrochen sein kann durch ein Oxy-, Thio- oder

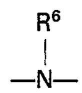

Rest, $C_5$—$C_{10}$-Cycloalkylen,

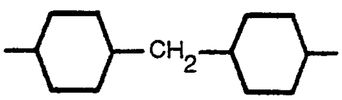, 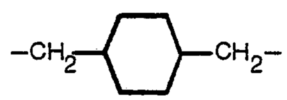, 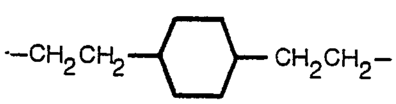,

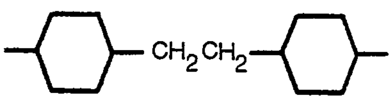, 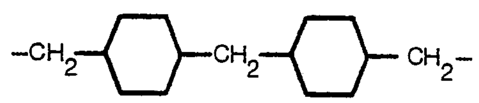,

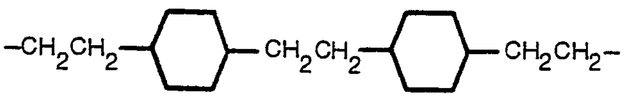, 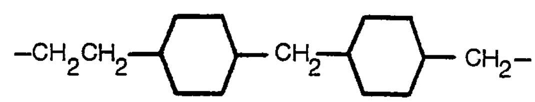,

$C_6$—$C_{12}$-Arylen oder $C_8$—$C_{14}$-Aralkylen; mit der Maßgabe daß mindestens ein $R^1$-Substituent für

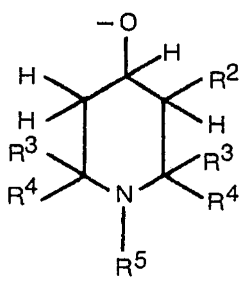 oder 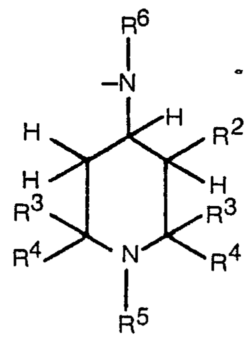

steht oder diese enthält.

2. Das Polymere gemäß Anspruch 1, wobei Y and $Y^1$ jeweils für

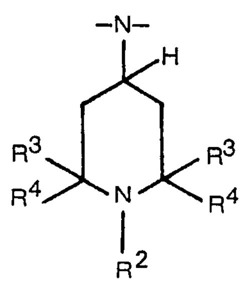

stehen.

3. Das Polymere gemäß Anspruch 2, wobei $R^3$ und $R^4$ jeweils für Methyl stehen, $R^5$ für Wasserstoff steht und X für $C_2$—$C_{12}$-Alkylen steht.

4. Verfahren zur Stabilisierung eines Polymeren, das normalerweise durch ultraviolette Strahlung beeinträchtigt wird, umfassend die Einverleibung einer im Sinne einer Stabilisierung gegen ultraviolette Strahlung wirksamen Menge eines nach Anspruch 1 hergestellten Polymeren in das Polymere.

5. Das Verfahren von Anspruch 4, wobei das zu stabilisierende Polymere ein Polyolefin ist.

**Patentansprüche für den Vertragsstaat: AT**

1. Verfahren zur Herstellung eines Polymeren durch Polymerisation eines Monomeren der Formel I, gegebenenfalls zusammen mit einem Comonomeren,

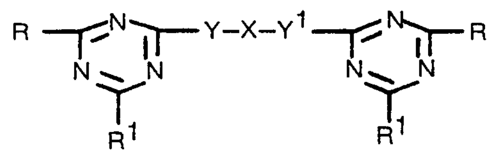

(I)

wobei R für $C_3$—$C_6$-Alkenyloxy, $C_3$—$C_6$-Alkenylamino oder Di($C_3$—$C_6$-alkenyl)amino steht; $R^1$ für $C_1$—$C_8$-Alkyl, $C_1$—$C_8$-Alkoxy, Halo, $C_1$—$C_8$-Alkylthio, $C_3$—$C_6$-Alkenyloxy, Amino, $C_3$—$C_6$-Alkenylamino, Di($C_3$—$C_6$-alkenyl)amino, die Gruppen

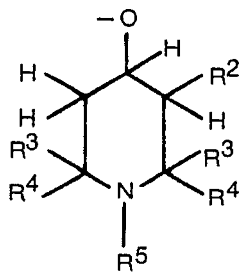

oder

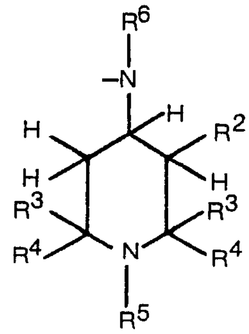

wobei $R^2$, $R^3$, $R^4$, $R^5$ und $R^6$ wie weiter unten definiert sind, $C_1$—$C_{18}$-Alkylamino, Di($C_1$—$C_{18}$)alkylamino, Morpholino, Pyrrolidyl, Piperidino, ein substituiertes $C_1$—$C_{18}$-Alkylamino oder ein substituiertes (Di($C_1$—$C_{18}$)alkylamino steht, wobei die Substituenten ausgewählt sind unter Amino, Cyano, Carboxy, Alkoxycarbonyl, wobei die Alkoxyeinheit 1 bis 8 Kohlenstoffatome hat, und den Gruppen

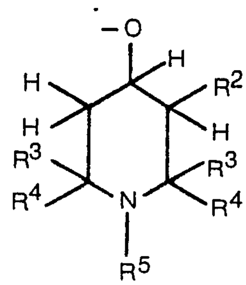

oder

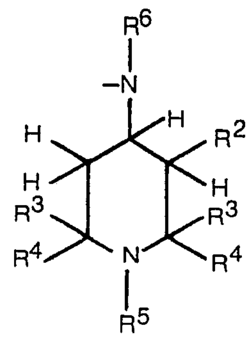

wobei $R^2$ für Wasserstoff, $C_1$—$C_8$-Alkyl oder Benzyl steht; $R^3$ und $R^4$ unabhängig für $C_1$—$C_8$-Alkyl, Benzyl oder Penethyl stehen oder gemeinsam mit dem Kohlenstoffatom, an das sie gebunden sind, ein $C_5$—$C_{10}$-Cycloalkyl bilden; und $R^5$ für Wasserstoff, $C_2$—$C_3$-Hydroxyalkyl, $C_1$—$C_8$-Alkyl, Hydroxyl oder Oxyl steht; $R^6$ für Wasserstoff, $C_1$—$C_8$-Alkyl oder

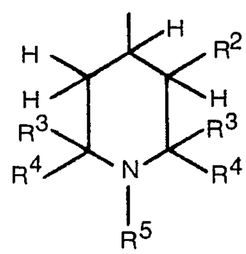

steht, wobei $R^2$, $R^3$, $R^4$ und $R^5$ wie vorstehend definiert sind; Y und Y', welche gleich oder verschieden sein können, für Oxy oder

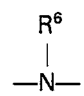

stehen, wobei $R^6$ wie vorstehend definiert ist; X für $C_2$—$C_{12}$-Alkylen steht, wobei der Alkylenkette unterbrochen sein kann durch ein Oxy-, Thio- oder

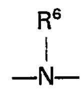

Rest, $C_5$—$C_{10}$-Cycloalkylen,

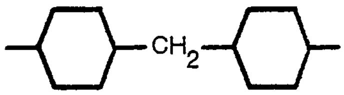 , 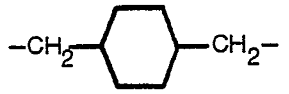 , 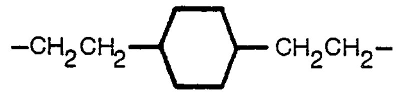

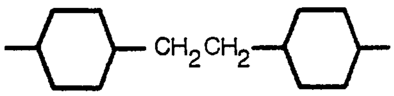 , 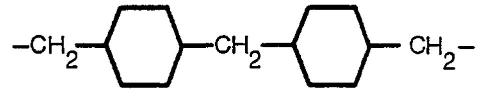

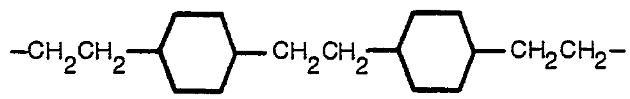 , 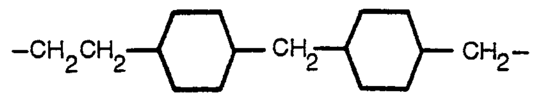

$C_6$—$C_{12}$-Arylen oder $C_8$—$C_{14}$-Aralkylen; mit der Maßgabe daß mindestens ein $R^1$-Substituent für

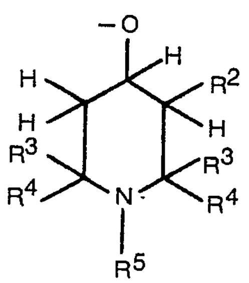 oder 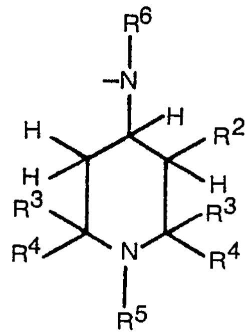

steht oder diese enthält.

2. Verfahren gemäß Anspruch 1, wobei Y and $Y^1$ jeweils für

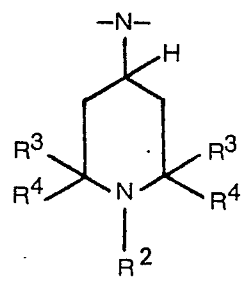

stehen.

3. Verfahren gemäß Anspruch 1, wobei $R^3$ und $R^4$ jeweils für Methyl stehen, $R^5$ für Wasserstoff steht und X für $C_2$—$C_{12}$-Alkylen steht.

4. Verfahren zur Stabilisierung eines Polymeren, das normalerweise durch ultraviolette Strahlung beeinträchtigt wird, umfassend die Einverleibung einer im Sinne einer Stabilisierung gegen ultraviolette Strahlung wirksamen Menge eines nach Anspruch 1 hergestellten Polymeren in das Polymere.

5. Das Verfahren von Anspruch 4, wobei das zu stabilisierende Polymere ein Polyolefin ist.

**Revendications pour les Etats contractants: BE CH DE FR GB IT LI NL SE**

1. Polymère préparé par polymérisation, avec éventuellement un comonomère, d'un monomère de formule (I)

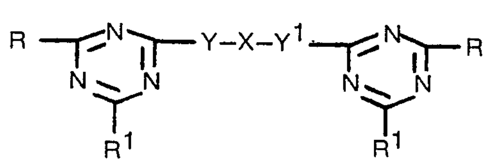 (I)

dans laquelle R représente un groupe alkenyl (en $C_3$—$C_6$)oxy, alkenyl(en $C_3$—$C_6$)amino, ou di(alkenyl en $C_3$—$C_6$)amino; $R^1$ représente un alkyle en $C_1$—$C_8$, alkoxy en $C_1$—$C_8$, halogène, alkylthio en $C_1$—$C_8$, alkenyl (en $C_3$—$C_6$)oxy, amino, alkenyl(en $C_3$—$C_6$)amino, di(alkenyl en $C_3$—$C_6$)amino, les groupes

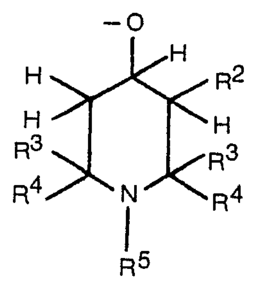

ou

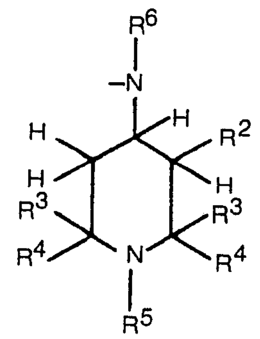

dans lesquels $R^2$, $R^3$, $R^4$, $R^5$ et $R^6$ sont tels que définis ci-dessous, alkyl (en $C_1$—$C_{18}$)amino, di(alkyl en $C_1$—$C_{18}$)amino, morpholino, pyrrolidyle, pipéridino, un alkyl (en $C_1$—$C_{18}$)amino substitué, ou un di(alkyl en $C_1$—$C_{18}$)amino substitué dans lesquels les substituants sont choisis parmis les groupes amino, cyano, carboxy, alkoxycarbonyle dans le radical alkoxy comporte 1 à 8 atomes de carbone, et les groupes

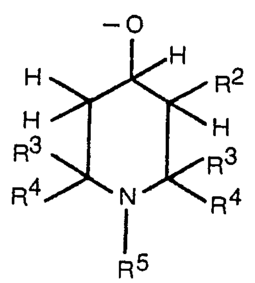

ou

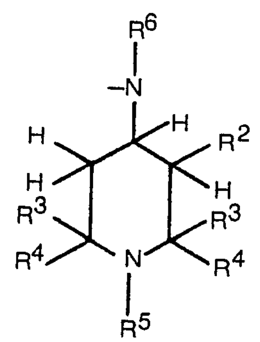

dans lesquels $R^2$ représente un atome d'hydrogène, un alkyle en $C_1$—$C_8$, ou un benzyle; $R^3$ et $R^4$ représentent indépendament un groupe alkyle en $C_1$—$C_8$, benzyle, ou phenethyle, ou forment ensemble avec l'atome de carbone auquel ils sont liés à un groupe cycloalkyle en $C_5$—$C_{10}$; et $R^5$ représente un atome d'hydrogène, un groupe hydroxyalkyle en $C_2$—$C_3$, alkyle en $C_1$—$C_8$, hydroxy, ou oxy; $R^6$ représente un atome d'hydrogène, un alkyle en $C_1$—$C_8$, ou

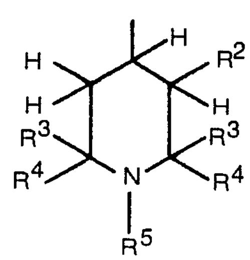

dans lequel $R^2$, $R^3$, $R^4$ et $R^5$ sont tels que définis précédemment; Y et $Y^1$ qui peuvent être identiques ou différents représentent un groupe oxy, ou

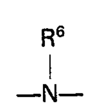

dans lequel $R^6$ est tel que défini précédemment; X représente un groupe alkylène en $C_2$—$C_{12}$ dans lequel la chaîne alkylène peut être interrompue par un radical oxy, thio, ou

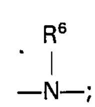

un cydoalkylène en $C_5$—$C_{10}$,

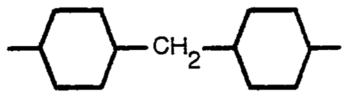 , 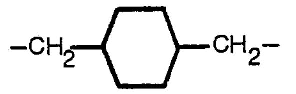 , 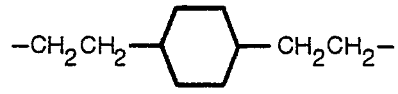 ,

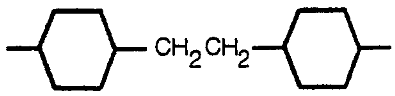 , 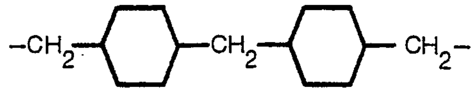 ,

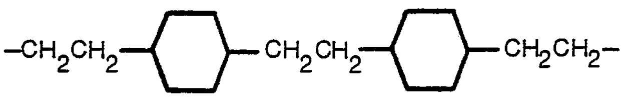 , 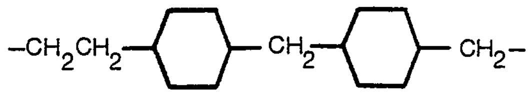

un arylène en $C_6$—$C_{12}$, ou aralkylène en $C_8$—$C_{14}$; étant entendu que au moins un substituant $R^1$ est ou contient

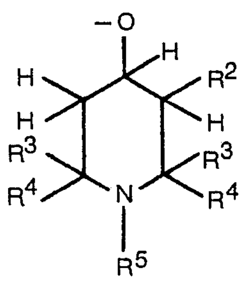 ou 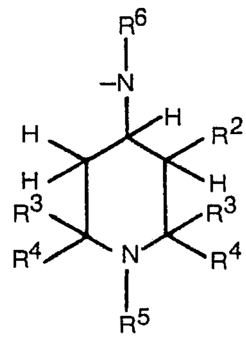

2. Polymère selon la revendication 1, dans lequel Y et $Y^1$ sont chacun

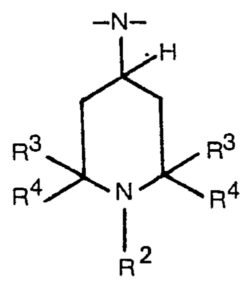

3. Polymère selon la revendication 2, dans lequel $R^3$ et $R^4$ sont chacun un groupe méthyle, $R^5$ un atome d'hydrogène, et X un alkylène en $C_2$—$C_{12}$.

4. Procédé pour stabiliser un polymère qui est normalement sujet à la dégradation par les radiations ultraviolettes, caractérisé par l'incorporation dans ledits polymère d'un polymère selon la revendication 1 en une quantité efficace pour la stabilisation aux ultraviolets.

5. Procédé selon la revendication 4, caractérisé en ce que le polymère à stabiiser est une polyoléfine.

**Revendications pour l'Etat contractant: AT**

1. Procédé pour préparer un polymère par polymérisation, avec éventuellement un comonomère, d'un monomère de formule (I)

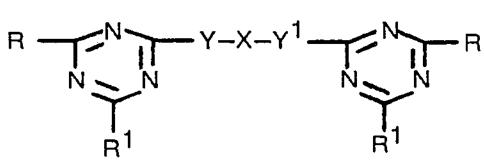 (I)

dans laquelle R représente un groupe alkenyl (en $C_3$—$C_6$)oxy, alkenyl(en $C_3$—$C_6$)amino, ou di(alkenyl en $C_3$—$C_6$)amino; $R^1$ représente un alkyle en $C_1$—$C_8$, alkoxy en $C_1$—$C_8$, halogène, alkylthio en $C_1$—$C_8$, alkenyl

(en $C_3$—$C_6$)oxy, amino, alkenyl(en $C_3$—$C_6$)amino, di(alkenyl en $C_3$—$C_6$)amino, les groupes

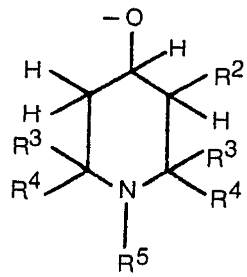

ou

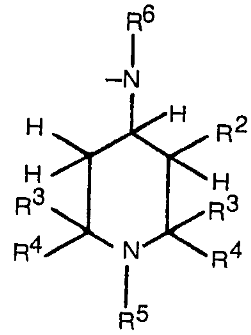

dans lesquels $R^2$, $R^3$, $R^4$, $R^5$ et $R^6$ sont tels que définis ci-dessous, alkyl (en $C_1$—$C_{18}$)amino, di(alkyl en $C_1$—$C_{18}$)amino, morpholino, pyrrolidyle, pipéridino, un alkyl (en $C_1$—$C_{18}$)amino substitué, ou un di(alkyl en $C_1$—$C_{18}$)amino substitué dans lesquels les substituants sont choisis parmis les groupes amino, cyano, carboxy, alkoxycarbonyle dans lequel le radical alkoxy comporte 1 à 8 atomes de carbone, et les groupes

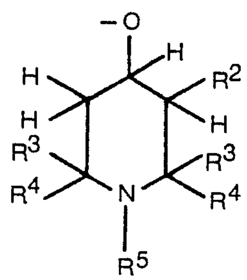

ou

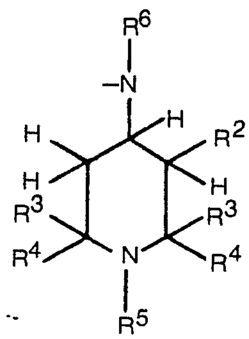

dans lesquels $R^2$ représente un atome d'hydrogène, un alkyle en $C_1$—$C_8$, ou un benzyle; $R^3$ et $R^4$ représentent indépendamment un groupe alkyle en $C_1$—$C_8$, benzyle, ou phenethyle, ou forment ensemble avec l'atome de carbone auquel ils sont liés à un groupe cycloalkyle en $C_5$—$C_{10}$; et $R^5$ représente un atome d'hydrogène, un groupe hydroxyalkyle en $C_2$—$C_3$, alkyle en $C_1$—$C_8$, hydroxy, ou oxy; $R^6$ représente un atome d'hydrogène, un alkyle en $C_1$—$C_8$, ou

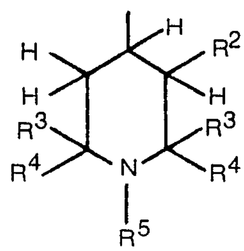

dans lequel $R^2$, $R^3$, $R^4$ et $R^5$ sont tels que définis précédemment; Y et $Y^1$ qui peuvent être identiques ou différents représentent un groupe oxy, ou

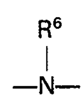

dans lequel $R^6$ est tel que défini précédemment; X représente un groupe alkylène en $C_2$—$C_{12}$ dans lequel la chaîne alkylène peut être interrompue par un radical oxy, thio, ou

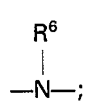

un cydoalkylène en $C_5$—$C_{10}$,

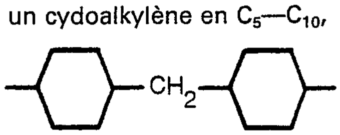 , 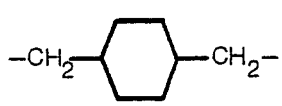 , 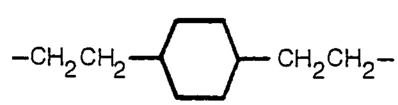 ,

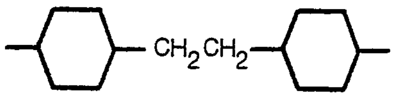 , 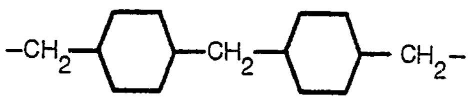 ,

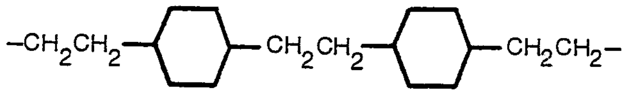 , 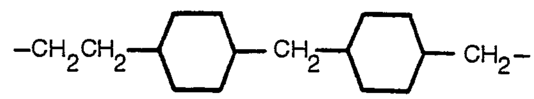 ,

un arylène en $C_6$—$C_{12}$, ou aralkylène en $C_8$—$C_{14}$; étant entendu que au moins un substituant $R^1$ est ou contient

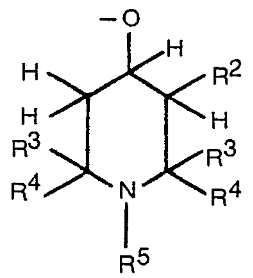

ou

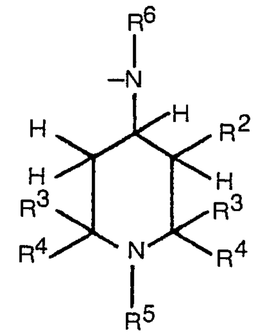

2. Procédé selon la revendication 1, caractérisé en ce que Y et $Y^1$ sont chacun

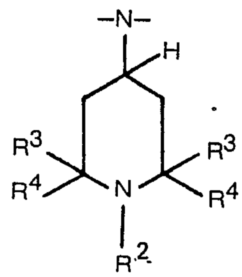

3. Procédé selon la revendication 1, caractérisé en ce que $R^3$ et $R^4$ représentent chacun un méthyle, $R^5$ représente un atome d'hydrogène, et X représente un alkylène en $C_2$—$C_{12}$.

4. Procédé pour stabiliser un polymère qui est normalement sujet à la dégradation par les radiations ultraviolettes, caractérisé par l'incorporation dans ledit polymère d'un polymère selon la revendication 1 en une quantité efficace pour la stabilisation aux ultraviolets.

5. Procédé selon la revendication 4, caractérisé en ce que le polymère à stabiiser est une polyoléfine.